Europäisches Patentamt

European Patent Office

Office européen des brevets

(11) Publication number: **0 163 781**
**B1**

# EUROPEAN PATENT SPECIFICATION

(45) Date of publication of patent specification: **18.01.89**

(51) Int. Cl.⁴: **B 27 M 3/00, E 04 C 3/42, B 23 B 41/00**

(21) Application number: **84201402.9**

(22) Date of filing: **01.10.84**

(54) Method and device for manufacturing a composite prestressed wooden beam.

(30) Priority: **02.05.84 NL 8401393**

(43) Date of publication of application:
**11.12.85 Bulletin 85/50**

(45) Publication of the grant of the patent:
**18.01.89 Bulletin 89/03**

(84) Designated Contracting States:
**AT BE CH DE FR GB IT LI LU NL SE**

(56) References cited:
**EP-A-0 034 224**
**EP-A-0 048 812**
**EP-A-0 102 446**
**DE-A-1 962 320**
**DE-C- 339 425**
**FR-A- 336 189**
**FR-A-2 446 147**
**NL-C- 75 638**
**US-A-2 039 398**
**US-A-2 389 944**
**US-A-3 687 563**
**US-A-3 992 767**

(73) Proprietor: **Groot Lemmer B.V.**
**Industrieweg 3**
**NL-8531 PA Lemmer (NL)**

(72) Inventor: **Schoonhoven, Johannes Leonardus**
**20, Aldebaran**
**NL-8531 NL Lemmer (NL)**

(74) Representative: **'t Jong, Bastiaan Jacobus et al**
**OCTROOIBUREAU ARNOLD & SIEDSMA**
**Sweelinckplein 1**
**NL-2517 GK 's-Gravenhage (NL)**

Courier Press, Leamington Spa, England.

## Description

The invention relates to a method of manufacturing a composite, prestressed wooden beam comprising the steps of: positioning a plurality of beam parts in contact with one another at least in a direction transverse of the direction of length, bending the beam parts into the desired shape and interconnecting the beam parts and passing a plurality of substantial pins through the beam parts in a direction transverse of the direction of length.

Prestressing in a curved shape may be carried out to compensate for sagging of a corresponding solid beam due to its own weight and the load so that in the position of use the prestressed beam has a perfectly straight shape. Prestressing is also carried out to obtain beams of a curved shape, for example, for use in bridges and roofs.

Beams manufactured by a known method of this kind (DE-C-339425) are also known by the term of laminated beams. The beam parts are then formed by laths individually provided with glue and clamped in a gauge. In this method the beam is gradually built up in the curved shape. Although a laminated beam may have particularly satisfying properties, the manufacture thereof is circuitous. As a matter of course, the glue joints are highly critical. In order to ensure a satisfactory glue joint the beam parts should have minimum humidity. This involves that such beam parts have to be dried for manufacturing a laminated beam. In the case of relatively thin laths this can be economically carried out. However, when it is desired to use thicker beam parts, the drying time of the wood is so long that it is no longer economically acceptable.

The invention has for its object to provide a method of the kind set forth in the preamble which can be simply and readily carried out and which does not impose particular requirements on the degree of humidity of the material.

In a method according to the invention this is achieved in that the number of beam parts positioned in mutual contact is bent integrally into the desired shape and retained, in that subsequently the connection is performed by passing a great number of smooth, substantially cylindrical pins through the beam parts in a direction transverse of the direction of length and in that subsequently the composite beam formed is disengaged. The pins take care of transferring the forces between the beam parts. Since glue is not used at all, the degree of humidity of the wood is unimportant. Since, moreover, the packet of beam parts is bent as a whole into the desired shape, bending takes a relatively short time so that a high rate of production can be attained by the method embodying the invention. In practice it has been found that the transfer of forces by the pins is performed so well that, when the beam is removed from the gauge, it springs back only over a very small distance. If desired, tensioning elements may be provided at some places in the beam, for example, lengths of wire with nuts at both ends. It is thus ensured that even after a long time the beam parts cannot move away from one another, for example, due to shrinkage by drying of the wood.

When in accordance with a further aspect of the invention the beam parts located in a transverse direction on the outside are each composed previously to form a beam part having the full length of the beam by positioning a number of shorter beam parts in contact with one another and by interconnecting these shorter beam parts so as to be resistant to bending, beams of greater length can be manufactured. The intermediate beam parts can remain in loose contact with one another by their head ends.

According to a particularly advantageous aspect of the method embodying the invention the pin is introduced at the area of the middle of the curve at right angles to the plane of the outer side of the beam, whilst the further pins are arranged parallel to the former. In this way the outermost pins are inclined to the beam surface. Thus at this area the pins are exposed to shear forces as well as to bending forces. This is advantageous for the loading state in the beam occurring near said ends.

When for each pin a hole is previously drilled with such a diameter that the pin can be inserted with press fit into the bore, a reliable joint is obtained without the risk of cracks in the beam.

An attractive appearance of the composite beam is obtained when in accordance with an embodiment of the invention the pins are inserted up to a short distance in front of the opposite side. On this side and on the two adjacent sides the pins or the ends of the bores are not visible.

The invention relates to and provides furthermore a device for manufacturing a composite wooden beam with a curved shape comprising a stationary, elongate gauge. According to the invention this device is provided with a displaceable drilling device comprising a drill holder having a rotary shaft that can be positioned transversely of the direction of length of the gauge, a displaceable pressing device having a pressing stroke transverse of the direction of length of the gauge and supporting means for supporting the pressing device with respect to the gauge. After the beam parts are clamped in the curved shape in the gauge the holes are made by the drilling device, whilst the pins can be pressed in the bores by the pressing device.

The device preferably comprises guide means for displacing the drilling and pressing devices in the direction of length of the gauge. In this way the operation can be carried out with accuracy, which is desired, in particular for manufacturing larger composite beams with regard to a desired, predetermined carrying capacity.

In a particularly advantageous embodiment of the device in accordance with the invention the gauge only comprises supporting means and retaining means. With the aid of the pressing device by which normally the pins are inserted into the beam the beam parts can be pressed against the supporting means, after which the retaining means are arranged in place for holding the beam parts in the curved shape. Owing to the structurally simple embodiment of the gauge, the device can be economically obtained.

When in accordance with an advantageous aspect of the invention the drilling device and the pressing device are relatively independently displaceable, it is possible to separately drill holes and insert pins. This is conducive to attain a high rate of production.

The gauge for use in the device embodying the invention may be designed in different ways. For example, the gauge parts may be disposed on a floor in a manner such that in the curved shape the beam lies flat on said floor. The aforesaid transverse direction is thus parallel to the floor and the pins are inserted into the beam parallel to the plane of the floor.

In an advantageous embodiment of the invention the gauge is arranged on a floor in a manner such that the transverse direction is the vertical direction, whilst the guide means comprise rails extending on both sides of the gauge and wheels of the drilling and pressing devices co-operating with said rails. Then the drilling and pressing devices can be designed with rugged constructions, whilst they can be very accurately guided with respect to the gauge.

When in a further embodiment of the invention two sets of rails are provided and at least one of the drilling and pressing devices has a gate-shaped frame provided with wheels co-operating with the outermost set of rails, whereas the other device has wheels co-operating with the inner set of rails and a contour falling inside the gate opening of the gate-shaped frame, the drilling device and the pressing device can be quite independently of one another positioned with respect to the gauge. In this way it is possible to operate in the two directions of length. It is thus possible, for example, to arrange the pins from the middle first to one end of the beam and subsequently from the middle to the other end of the beam.

According to an embodiment of the invention the supporting means for supporting the pressing device with respect to the gauge may comprise laterally projecting flanges on the rails and members on the pressing device gripping behind said flanges. The path of the forces exerted by the pressing device is thus very short which contributes to a robust structure of the device.

In a further embodiment of the invention the device is characterized by a milling device provided with auxiliary guide means co-operating with the guide means for the drilling and pressing device. In this way a universal device is obtained by means of which curved framework girders can also be made.

This embodiment of the invention becomes advantageously manifest when the guide means comprise rails and the milling device is provided with wheels co-operating with rails for the drilling or pressing device.

The same milling device can also be used for processing the transverse beams of a framework girder in a device embodying the invention having a separate auxiliary supporting device for the milling device comprising a set with two rail parts and a retaining device for wooden beam parts to be milled.

By this further embodiment of the invention a very generally employable device is obtained with relatively low investments for the manufacture of composite wooden beams having a curved shape inter alia framework girders.

The method and the device embodying the invention will be described more fully with reference to the accompanying drawings.

Figs. 1 to 3 are schematic views for explaining the method according to the invention.

Fig. 4 is a basic elevational view of a device embodying the invention.

Fig. 5 is a perspective overall view of a real embodiment of a device in accordance with the invention.

Fig. 6 is a fragmentary, perspective view of the drilling device of the device shown in Fig. 5.

Fig. 7 is a fragmentary, perspective view of the pressing device of the device shown in Fig. 5.

Fig. 8 shows part of a composite beam manufactured by the method according to the invention.

Fig. 9 is a perspective view of a composite wooden beam having a curved shape constructed in the form of a framework girder.

Fig. 10 is a schematic view to elucidate the method of manufacturing a girder as shown in Fig. 9.

Fig. 11 schematically shows the composing parts of a framework girder.

Fig. 12 is a fragmentary, perspective view of a milling device to be used in the device embodying the invention for the manufacture of curved framework girders.

Fig. 13 is a perspective view in detail of a junction of a framework girder.

Figs. 14 and 15 are views of details of the component parts of the junction shown in Fig. 13.

Fig. 16 schematically shows the work on a transverse beam for the framework girder.

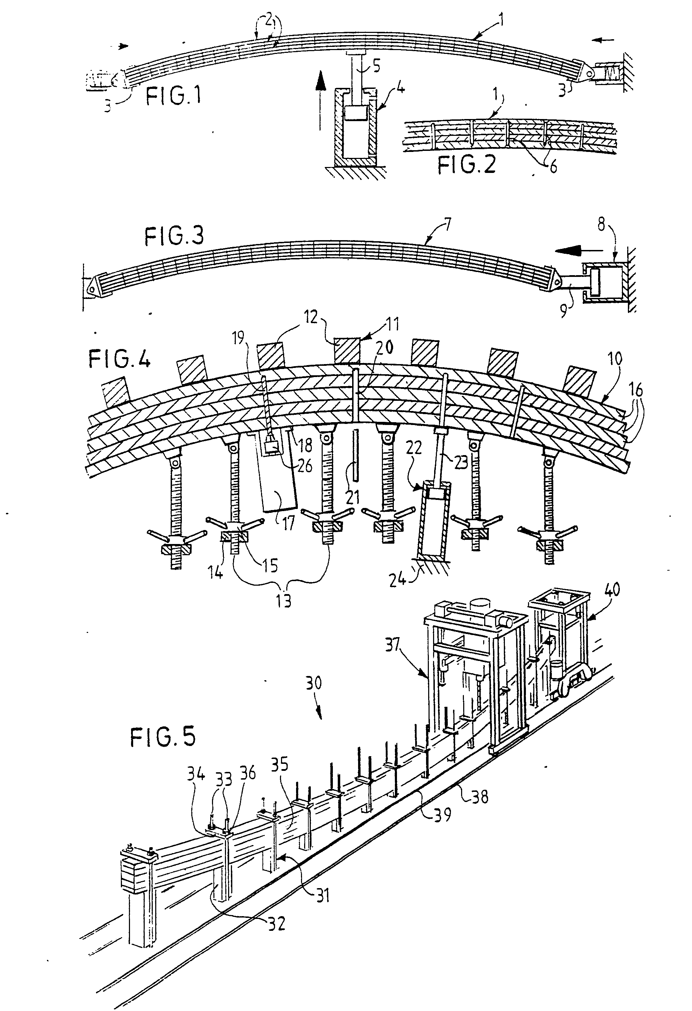

From Fig. 1 it is apparent that a plurality of beam parts 2 are positioned in contact with one another in a direction transverse of the direction of length. The beam parts 2 are clamped at the ends in clamps 3. According to the invention, after the beam parts 2 are positioned in contact with one another, the packet of beam parts 2 is bent into the finally desired shape of the composite beam 1. This is schematically indicated by the hydraulic jack 4, the stamp 5 of which bends the packet of beam parts 2. When the desired curve is attained, the stamp 5 is blocked so that the resultant shape is maintained. Then the beam parts embodying the invention are interconnected by passing a large number of smooth, substantially cylindrical pins through the beam parts 2 in the direction transverse of the direction of length i.e. in the plane of the drawing. Fig. 2 shows that these smooth, cylindrical pins may have the form of nails 6. After all nails 6 are inserted, the stamp 5 is released and the resultant curved composite wooden beam 1 can be taken out of the clamps 3. The composite beam 1 springs back only to a very slight extent and maintains its curved shape aimed at.

Fig. 3 shows that a composite beam 7 can also be maintained in the curved shape by means of a stamp 9 of a jack 8 engaging the beam in a direction of length.

The construction of the smooth pins in the form of nails shown in Fig. 2 is suitable for manufacturing composite beams in a lightweight structure by the method embodying the invention.

In the case of heavier constructions a hole is previously milled for each pin, the diameter being such that the pin can be inserted with press fit into the bore.

A device for carrying out this method is schematically shown in Fig. 4. This device comprises a gauge 11 consisting of supporting elements 12 and screw jacks 13 arranged opposite the former. The supporting elements 12 are disposed in the desired curved shape so that the beam parts 16 can be pressed into the curved shape finally desired for the beam 10 by the screw jacks 13. The screw jacks 13 comprise screwthreaded rods engaged by nuts 15 bearing on fixed supports 14. The device furthermore comprises a displaceable drilling device 17 provided at the front end with a supporting face 18 so that the drill 19 in the drill holder 26 can invariably be positioned at right angles to the plane of the beam 10. After a bore 20 is made by means of the drilling device 17, a pin 21 is pressed into said bore with the aid of a pressing device 22. The pressing device 22 comprises a plunger rod 23 which can engage the head end of the pin 21. The pressing device 22 bears on a support 24, which is stationary with respect to the gauge so that this support 24 can absorb the reactive forces. The gauge 11 may be arranged flat on the floor. Then the supporting elements 12 project upwards from the floor surface and the beam parts 16 are positioned on edge side by side and clamped tight in the gauge. The advantage of such a disposition is that the beam parts 16 are automatically and simply positioned in a transverse direction correctly one with respect to the other.

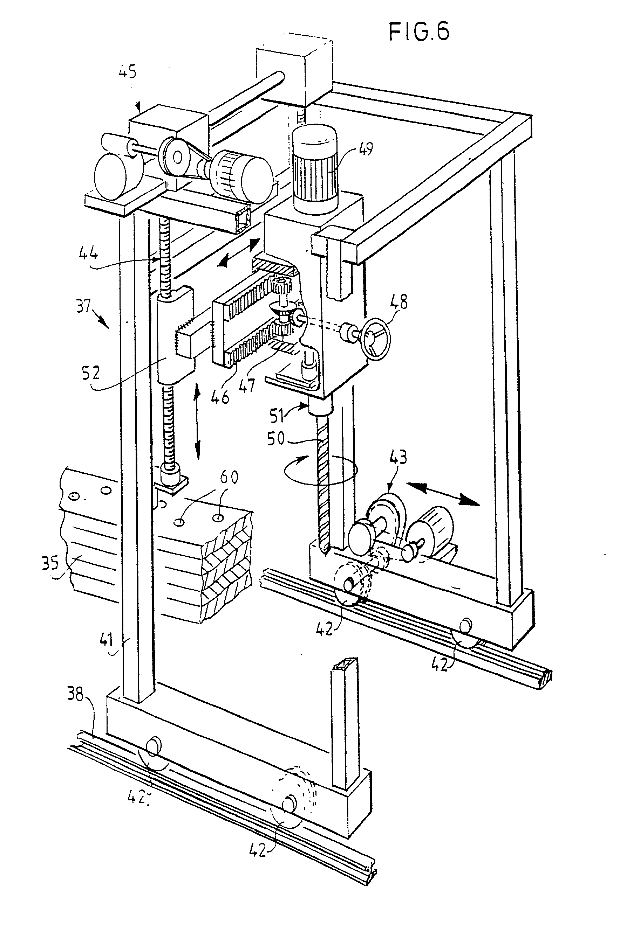

As an alternative, as shown in Fig. 5, the gauge may be arranged so that the beam parts are stacked up. Then the beam 35 is curved in a direction perpendicular to the floor. In the device 30 of Fig. 5 the gauge 31 is simply formed by supporting elements 32 and retaining elements. The retaining elements are formed by pairs of screw rods 33 over which a clamping plate 34 is arranged, which is retained with the aid of nuts 36 on the screw rods 33. Advantageously the supporting elements 32 are simply formed by wooden blocks disposed between the screw rods 33. The supporting elements 32 may be built up from a number of wooden blocks of different thicknesses so that the desired curvature of the gauge 31 is obtained in a very simple manner.

With the aid of the pressing device 40 to be described in detail hereinafter the parts of the beam 35 are pressed onto the supporting elements 32 of the gauge 31 after which the curve thus formed is fixed by means of the clamping plates 34 and the nuts 36. Thus the nuts 36 do not serve to bend to the beam 35 by tightening the same, but only for fixing the clamping plate 34 and hence the beam 35.

Fig. 5 furthermore shows that the device 30 comprises a drilling device 37. This will be described more fully hereinbelow. The drilling device 37 and the pressing device 40 are displaceable in the direction of length of the gauge 31 by being mobile along rails 38 and 39 respectively. Although the drilling device and the pressing device may be arranged on a single carriage, they are preferably constructed to be independent one of the other.

It is apparent that the drilling device 37 has a gateshaped frame 41 provided with wheels 42 co-operating with the outer set of rails 38. The pressing device 40 has wheels 56 co-operating with the inner set of rails 39 and it has furthermore a contour fitting within the gate opening of the gate-shaped frame of the drilling device 37 so that the pressing device 40 can pass below the drilling device 37 or the drilling device 37 can move over the pressing device. The two devices can thus be positioned fully independently one of the other.

Fig. 6 shows that a driving device 43 is connected with at least one of the wheels 42 of the drilling device 37. The device 37 can thus be moved in a reciprocatory manner along the rails 38. The drill 50 is held in a drill holder 51, which can be rotatably driven by a motor 49. The drill holder 51 can be displaced in a direction of height because it is connected with a slide 52 engaging screw spindles of the vertical setting 44. The screw spindles can be rotated by a drive 45, which results in a vertical displacement of the slide 52. The drill holder 51 can be displaced in a horizontal direction with respect to the slide 52, that is to say, transversely of the direction of length of the beam 35 by means of a pinion 47 engaging a toothed rack 46 of the slide 52, which pinion can be turned with the aid of the handwheel 48.

For making the bores 60 in the beam parts of the beam 35 the frame 41 is first positioned in the direction of length with the aid of the drive 43. Then with the aid of the handwheel 48 the drill 50 is correctly positioned in a transverse direction. By actuating the vertical setting 44 a bore 60 is made at the desired place with the aid of the drill 55.driven by the motor 49. Fig. 6 only partly shows the beam 35, whilst the gauge 31 is not shown. The bores 60 are, however, only made when the parts of the beam 35 are completely fixed in the gauge 31.

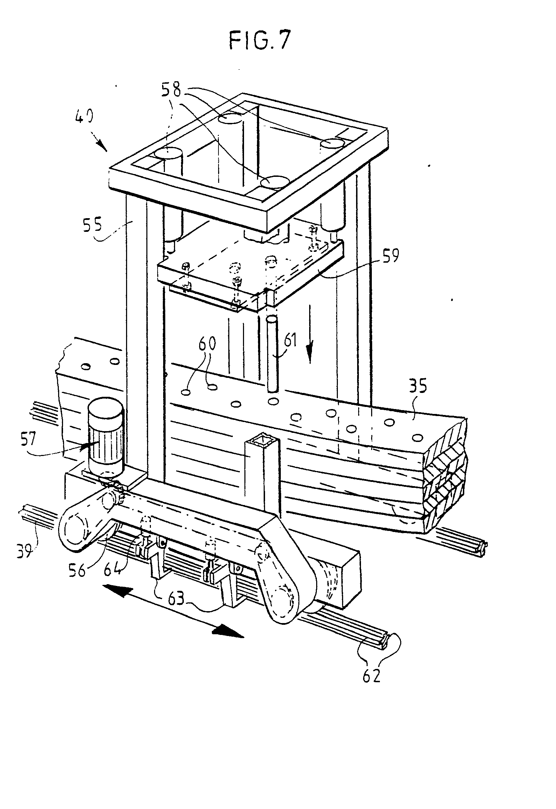

It will be obvious that, when the drilling device 37 has to move over the pressing device 40, the drill holder 51 has to be moved into its topmost position and the drill 50 is removed from the drill holder 51. The pressing device 40 shown in Fig. 7 comprises a frame 55, which is mobile by means of wheels 56 along the inner set of rails 39. For displacing this device a driving device 57 engages the wheels 56. The pressing device 40 in the embodiment shown comprises four jacks 58, which are capable in common of pressing down a pressing table 59. It will be obvious that a different number of jacks than the four shown may be used and that even a single heavy jack may be used in an appropriate manner.

As stated above the pressing device 40 in the device 30 has a double function. After the beam parts have been relatively positioned and are freely bearing on some of the supporting elements 32 of the gauge 31, the set of beam parts is pressed against the supporting elements 32 with the aid of the pressing device 40. First the set of beam parts is pressed in the middle against the supporting element 32 concerned. Whilst the pressing table 59 continues exerting pressure, a clamping plate 34 is slipped onto the screw rods 33 and fixed in place with the aid of the associated nuts 36. Then the pressing table 59 can be retired from the pressing device after which the pressing device is moved into a next position in which it again presses the beam parts against the neighbouring supporting element 32, after which clamping plates and nuts are again put in place. After in this way the beam parts have been bent into the correct shape and fixed with the aid of the clamping plates, the bores 60 are made in the beam parts in the manner described above. Since in accordance with an advantageous aspect of the invention the drilling device and the pressing device can move fully independently one of the other, the pins 61 can be inserted already after a number of bores have been made. This is the second function of the pressing device 40. The pin 61 concerned is disposed above a bore 60, after which the pin 61 is pressed into the beam 35 with the aid of the pressing table 59. For absorbing the reactive forces of the pressing device the rails 39 have laterally projecting flanges 62. With the frame 55 are connected pivotable hooks 63, which can be moved by means of suitable rams 64 from the outwardly deflected position into the position of engagement. In the position of engagemenet shown the hooks 63 grip below the flanges 62 of the rails 39. Thus the reactive forces of the pressing device 40 are returned to the ground along a very short path.

As is shown in Fig. 5 the beam 35 is clamped in a substantially symmetrical position in the gauge 31. In the area of the middle of the curvature of the beam 35 the drill 50 will make a bore at right angles to the plane of the outer side of the beam. All bores are made parallel to one another so that in the area of the ends of the beam 35 the bores are at an angle to the outer side of the beam. Therefore, the pins extend in a slightly inclined position across the beam parts so that they are effectively capable of absorbing also a bending force.

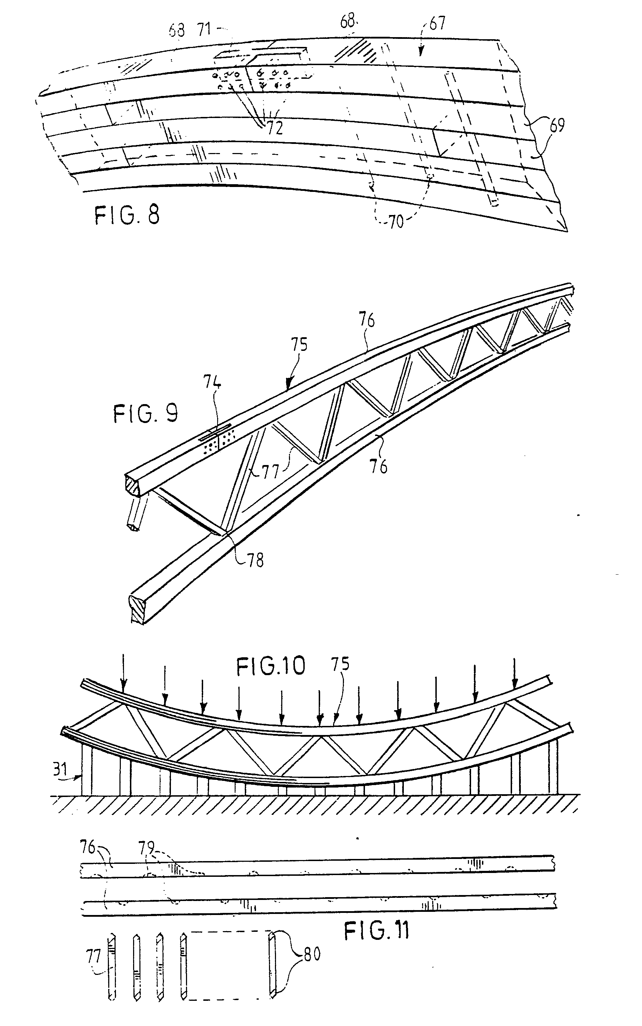

The beam 67 partly shown in Fig. 8 has a larger overall length than each separate beam part. According to an embodiment of the invention the beam part 68 located on the outer side in the transverse direction are previously assembled to form a beam part of the full length of the beam 67 by interconnecting these beam parts 68 in a manner resistant to bending. The bending-resistant junction is formed in this case with the aid of a plate 71 arranged in slots in each end of the beam parts 68. Through the ends of the beam parts 68 and the plate are passed a large number of pins 72. The intermediate beam parts 69 need not be interconnected in a bending-resistant manner. The connection between the beam parts established by the pins 70 ensures that the beam 67 built up in a direction of length behaves, indeed, as a single beam.

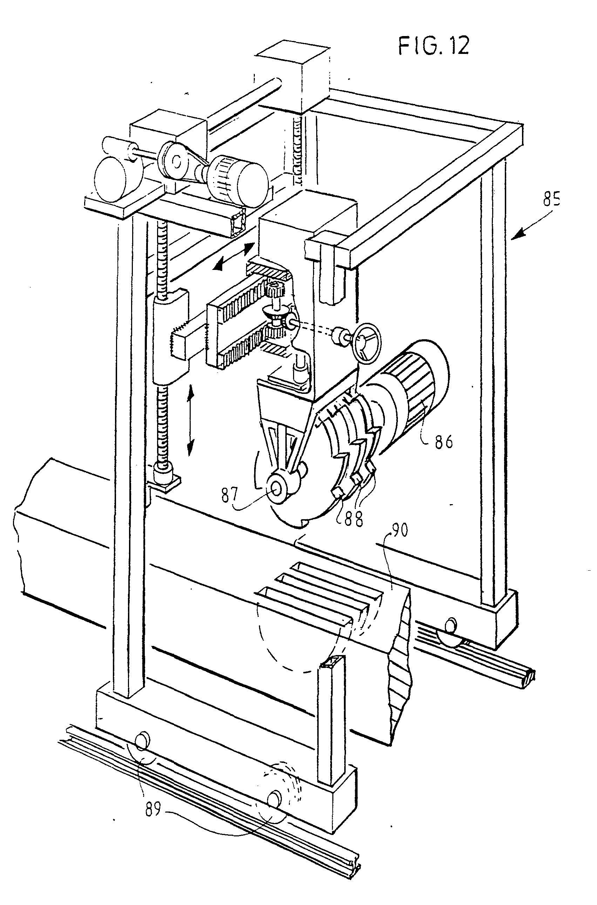

By means of a relatively limited extension the device embodying the invention is also suitable for the manufacture of curved, composite wooden beams in framework structures. Such a framework girder 75 is shown in Fig. 9. The framework girder 75 comprises two longitudinal beams 76 and transverse beams 77 arranged between the former. The longitudinal beams 76 and the transverse beams 77 are interconnected at their junctions, whilst they are held clamped tight·in the curved shape. Fig. 10 schematically shows the framework girder 75 whilst it is clamped in the gauge 31 of the device shown in Fig. 5.

By building up the longitudinal beams in the direction of length with the aid of bending-resistant junctions 74 shown in detail in Fig. 8 these beams may have a great length so that the framework girder can also be made to a great length.

Fig. 11 schematically shows that the longitudinal beams 76 have to be provided with slots 79 and the transverse beams 77 with tags 80.

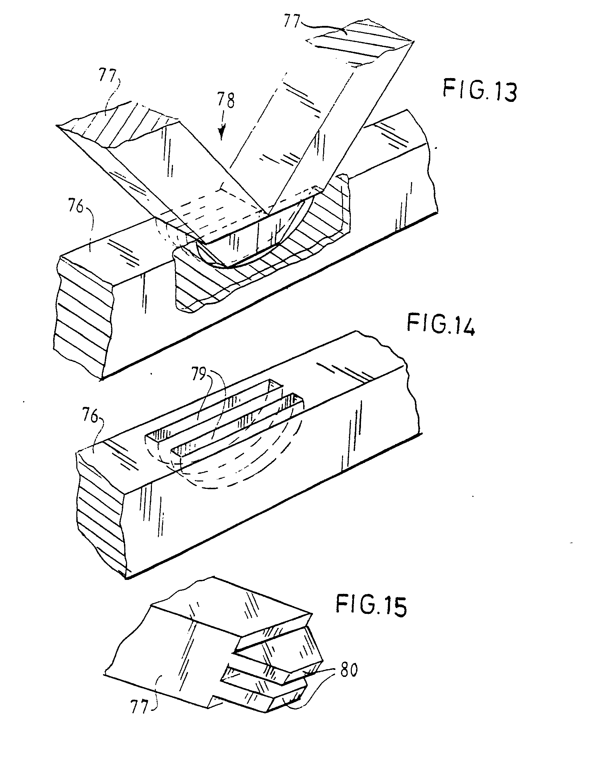

Figs. 13 to 15 illustrate in detail the required machining. The longitudinal beam 76 has milled in it pairs of longitudinal slots at intervals, whilst also by milling pairs of tags are made at the ends of the transverse beams 77.

The device permits in a simple manner to make curved framework girders by using a milling device provided with auxiliary guide means co-operating with the guide means for the drilling and pressing devices. A milling device co-operating with the device 30 of Fig. 5 is shown in Fig. 12. This milling device comprises a shaft 87 driven by a motor 86, which shaft can be moved upwards and to one side in the manner corresponding to the drilling device 37. The milling shaft 87 has three cutters 88.

The device 85 is provided with guide wheels 89, which can co-operate with the rails 38 of the device 30. With the aid of the cutters 88 a number of slots can be milled in a beam 90 clamped in the gauge 31 of the device. Fig. 12 shows that each time three slots are made.

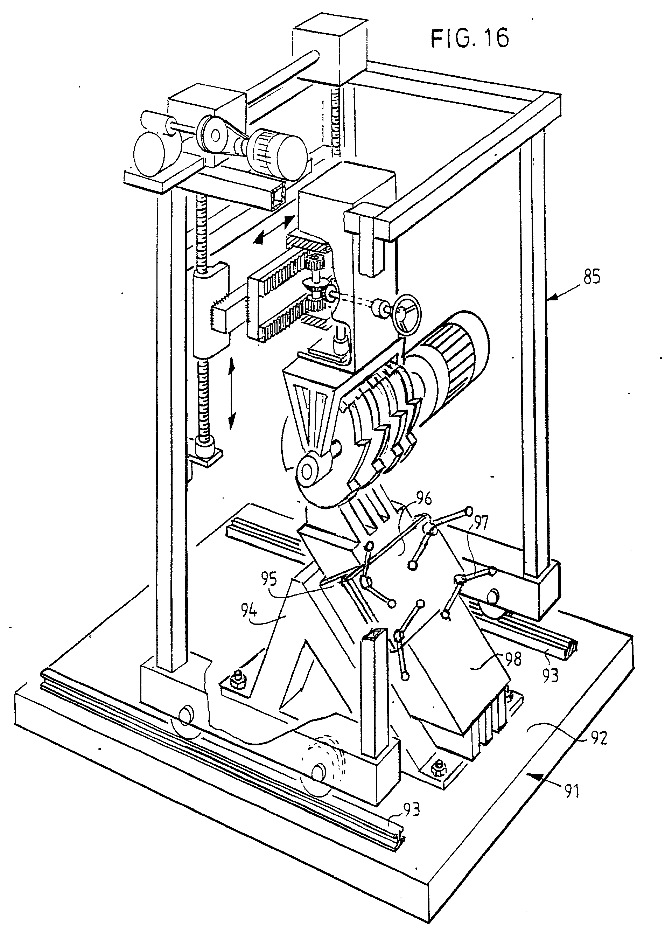

According to a further embodiment of the invention the device is characterized by a separate auxiliary supporting device shown in Fig. 16. This auxiliary supporting device 91 comprises a frame 92 having two rail parts 93 having the same gauge as the rails 38 of the device 30. By means of a crane the device 85 can be optionally disposed on the rail parts 93 of the auxiliary supporting device 91 or on the rails 38 of the device 30. When the milling device 85 is deposited on the auxiliary supporting device 91, the transverse beams can be worked. The frame 91 comprises a clamping device 94 for transverse beams 98. This clamping device 94 is provided with a holder 95, to which a closing plate 96 can be clamped with the aid of dogs 97. By clamping the plate 96 the beam 98 is clamped tight.

As is shown four cutters are used for milling the tags or pins on the beam 98. These cutters may be used both for milling the slots and for milling the pins.

## Claims

1. A method of manufacturing a composite, prestressed wooden beam comprising the steps of: positioning a plurality of beam parts (21) in contact with one another at least in one direction transverse of the direction of length, bending the beam parts into the desired shape, interconnecting the beam parts and passing a plurality of substantially cylindrical pins (6, 21) through the beam parts in a direction transverse of the direction of length characterized in that all beam parts (2) are positioned in mutual contact in unstressed condition and are bent integrally into the desired shape and retained, in that subsequently the connection is performed by passing metal pins (6, 21) through the beam parts over substantially the full width of the beam and in that subsequently the resultant composite beam is disengaged, the prestressing forces being fully taken up by the pins (6, 21).

2. A method as claimed in Claim 1 characterized in that the beam parts located on the outer side in the transverse direction are previously assembled to form a beam part having the full length of the beam by positioning a number of shorter beam parts in contact with one another and by interconnecting these shorter beam parts in a bendingresistant manner.

3. A method as claimed in Claim 1 or 2 characterized in that in the area of the middle of the curvature the pin is arranged at right angles to the plane of the outer side of the beam and in that the further pins are inserted parallel to said pin.

4. A method as claimed in anyone of the preceding Claims characterized in that for each pin a hole is previously drilled, the diameter of the hole being such that the pin can be inserted with press fit into the bore.

5. A method as claimed in anyone of the preceding Claims characterized in that the pins are introduced from one side up to a small distance in front of the opposite pin.

6. A device for manufacturing a composite, prestressed wooden beam with a curved shape comprising a stationary, elongate gauge (11, 31) characterized by a displaceable drilling device (17, 37) comprising a drill holder having a rotary shaft to be positioned transversely of the direction of length of the gauge, a displaceable pressing device (22, 40) having a pressing stroke transverse of the direction of length of the gauge and supporting means for supporting the pressing device with respect to the gauge.

7. A device as claimed in Claim 6 characterized by guide means for guiding the displacement of the drilling and pressing devices in the direction of length of the gauge.

8. A device as claimed in Claim 6 or 7 characterized in that the gauge only comprises supporting means and retaining means.

9. A device as claimed in anyone of Claims 6 to 8 characterized in that the drilling device and the pressing device are relatively independently displaceable.

10. A device as claimed in anyone of Claims 6 to 9 characterized in that the gauge is arranged on a floor so that the transverse direction is the vertical direction and in that the guide means comprise rails extending on both sides of the gauge and wheels of the drilling and pressing devices co-operating with said rails.

11. A device as claimed in Claim 10 characterized in that two sets of rails are provided, in that at least one of the drilling and pressing devices comprises a gate-shaped frame having wheels co-operating with the outer set of rails, whereas the other device comprises wheels co-operating with the inner set of rails and has a contour falling inside the gate opening of the gate-shaped frame.

12. A device as claimed in Claim 11 characterized in that the supporting means for supporting the pressing device with respect to the gauge comprise laterally projecting flanges on the rails and members on the pressing device adapted to grip behind said flanges.

13. A device as claimed in anyone of Claims 6 to 12 characterized by a milling device having auxiliary guide means co-operating with the guide means for the drilling and pressing devices.

14. A device as claimed in Claim 13 characterized in that the milling device is provided with wheels co-operating with rails for the drilling or the pressing device.

15. A device as claimed in Claim 14 characterized by a separate auxiliary supporting device for the milling device comprising a frame having two rail parts and a retaining device for the wooden beam parts to be milled.

## Patentansprüche

1. Verfahren zum Herstellen zusammengesetzter und unter Vorspannung stehender hölzerner Träger, mit den Verfahrensschritten: Anordnen einer Mehrzahl von Trägerteilen (2), so daß diese in zumindest einer Richtung quer zu ihrer Längsrichtung miteinander in Berührung stehen, Biegen der Trägerteile in die gewünschte Form, Verbinden der Trägerteile miteinander und Durchdringen der Trägerteile mit einer Mehrzahl von im wesentlichen zylindrischen Stiften (6, 21) in einer Richtung quer zu ihrer Längsrichtung, dadurch gekennzeichnet, daß alle Trägerteile (2) in spannungsfreiem Zustand in gegenseitige Berührung stehend angeordnet werden und gemeinsam in die gewünschte Form gebogen und festgespannt werden, worauf das Verbinden der Trägerteile durch Hindurchführen von Metallstiften (6, 21) durch die Trägerteile über die im wesentlichen gesamte Breite des Trägers erfolgt, worauf der sich ergebende zusammengesetzte Träger freigegeben wird und die Vorspannkräfte gänzlich von den Stiften (6, 21) aufgenommen werden.

2. Verfahren nach Anspruch 1, dadurch gekennzeichnet, daß die außen angeordneten Trägerteile in Querrichtung zuvor aneinander montiert werden, um ein Trägerteil zu bilden, welches sich über die gesamte Länge des Tragers erstreckt, indem eine Anzahl kürzerer Trägerteile miteinander in Berührung gebracht werden und diese kürzeren Trägerteile biegefest miteinander verbunden werden.

3. Verfahren nach Anspruch 1 oder 2, dadurch gekennzeichnet, daß der Metallstift im Mittelbereich des Bogens der Stift im richten Winkel zur Außenseite des Trägers angeordnet wird und weitere Metallstifte parallel zu diesem Metallstift angeordnet werden.

4. Verfahren nach einem der vorangehenden Ansprüche, dadurch gekennzeichnet, daß zuvor für jeden Metallstift ein Loch gebohrt wird, dessen Durchmesser so gewählt ist, daß der Metallstift im Preßsitz in die Bohrung eingefügt werden kann.

5. Verfahren nach einem der vorangehenden Ansprüche, dadurch gekennzeichnet, daß die Metallstifte von einer Seite bis zu einem geringen Abstand zu einem gegenüberliegenden Metallstift eingeführt werden.

6. Vorrichtung zum Herstellen eines zusammengesetzten, unter Vorspannung stehenden hölzernen Trägers, mit einer ortsfesten länglichen Lehre (11, 31), gekennzeichnet durch eine verlagerbare Bohreinrichtung (17, 37) mit einer Bohrerhaltung, welche eine quer zu der Längsrichtung der Lehre positionierbare drehbare Achse aufweist, und eine verlagerbare Preßeinrichtung (22, 40), deren Preßhub quer zu der sich in Längsrichtung erstreckenden Lehre erfolgt, und Stützmitteln zum Abstützen der Preßeinrichtung relativ zu der Lehre.

7. Vorrichtung nach Anspruch 6, dadurch gekennzeichnet, daß sie Führungsmittel zum Verlagern der Bohreinrichtung und Preßeinrichtung in Längsrichtung der Lehre aufweist.

8. Vorrichtung nach Anspruch 6 oder 7, dadurch gekennzeichnet, daß die Lehre nur Stützmittel und Festhaltemittel aufweist.

9. Vorrichtung nach einem der Ansprüche 6 bis 8, dadurch gekennzeichnet, daß die Bohreinrichtung und die Preßeinrichtung unabhängig voneinander verlagert werden können.

10. Vorrichtung nach einem der Ansprüche 6 bis 9, dadurch gekennzeichnet, daß die Lehre so am Boden angebracht ist, daß die Querrichtung die vertikale Richtung ist, und daß die Führungseinrichtung Schienen aufweisen, welche sich an beiden Seiten längs der Lehre erstrecken und in welche Räder der Bohreinrichtung und der Preßeinrichtung eingreifen.

11. Vorrichtung nach Anspruch 10, dadurch gekennzeichnet, daß sie zwei Schienengruppen aufweist, wobei zumindest die Bohreinrichtung oder die Preßeinrichtung einen torbogenförmigen Rahmen mit Rädern aufweist, welche in die äußere Schienengruppe eingreifen, währenddessen die jeweils andere Einrichtung Räder zum Eingreifen in die innere Schienengruppe aufweisen und die Außenkontur dieser Einrichtung der Öffnung des torbogenförmigen Rahmens entspricht.

12. Vorrichtung nach Anspruch 11, dadurch gekennzeichnet, daß das Stützmittel zum Abstützen der Preßeinrichtung im Bezug auf die Lehre Schienen mit sich seitlich erstreckenden Borden und an der Preßeinrichtung ausgebildete Teile aufweist, welche die Schienenborde hintergreifen können.

13. Vorrichtung nach einem der Ansprüche 6 bis 12, gekennzeichnet durch eine Fräseinrichtung mit einer Hilfsführungseinrichtung, welche mit den Führungsmitteln für die Bohreinrichtung und Preßeinrichtung zusammenwirkt.

14. Vorrichtung nach Anspruch 13, dadurch gekennzeichnet, daß die Fräseinrichtung mit Rädern versehen ist, welche in die Schienen der Bohreinrichtung oder der Preßeinrichtung eingreifen.

15. Vorrichtung nach Anspruch 14, gekennzeichnet durch eine gesonderte Hilfs-Stützeinrichtung für die Fräseinrichtung mit einem Rahmen mit zwei Schienenteilen und einer Spanneinrichtung für die hölzernen Trägerteile, welche zu fräsen sind.

**Revendications**

1. Procédé de fabrication d'une poutre en bois composite précontrainte, comprenant les phases consistant à: positionner une pluralité d'éléments de poutre ou planches élémentaires (2) en contact entre eux dans au moins une direction transversale à la direction de la longueur, courber ces éléments de poutre à la forme désirée, assembler les éléments de poutre et enfiler une pluralité de broches sensiblement cylindriques (6, 21) à travers les éléments de poutre, dans une direction transversale à la direction de la longueur, caractérisé en ce qu'on positionne les éléments de poutre (2) en contact mutuel dans l'état détendu, qu'on les cintre tous ensemble à la forme désirée et qu'on les maintient dans cette forme, puis on effectue l'assemblage en enfilant des broches métalliques (6, 21) à travers les éléments de la poutre à peu près sur toute la largeur de cette poutre, puis on dégage la poutre composite résultante, les forces de précontrainte étant entièrement supportées par les broches (6, 21).

2. Procédé selon la revendication 1, caractérisé en ce qu'on assemble préalablement les éléments de poutre situés sur le côté extérieur, dans la direction transversale, pour former un élément de poutre ayant la longueur totale de la poutre, ce qui s'effectue en plaçant un certain nombre d'éléments de poutre plus courts en contact entre eux et en assemblant ces éléments de poutre courts par des liaisons résistantes à la flexion.

3. Procédé selon la revendication 1 ou 2, caractérisé en ce que la broche située au milieu de l'arc de la courbe est enfoncée perpendiculairement au plan de la face externe de la poutre et que les autres broches sont enfoncées parallèlement à cette broche.

4. Procédé selon une quelconque des revendications précédentes, caractérisé en ce qu'on perce préalablement un trou pour chaque broche, le diamètre du trou étant tel que la broche puisse être enfilée dans le trou avec un ajustement à serrage.

5. Procédé selon une quelconque des revendications précédentes, caractérisé en ce que les broches sont enfoncées à partir d'une face jusqu'à une petite distance en retrait de la face opposée.

6. Dispositif pour fabriquer une poutre en bois composite précontrainte de forme courbe, comprenant un gabarit fixe de forme allongée (11, 31), caractérisé par un dispositif de perçage mobile (17, 37) comprenant un porteforet qui possède un arbre rotatif qui doit être positionné transversalement à la direction de la longueur du gabarit, un dispositif de pressage mobile (22, 40) possédant une course de pressage orientée transversalement à la longueur du gabarit, et des moyens de support destinés à donner appui au dispositif de pressage sur le gabarit.

7. Dispositif selon la revendication 6, caractérisé par des moyens de guidage servant à guider le déplacement des dispositifs de perçage et de pressage dans la direction de la longueur du gabarit.

8. Dispositif selon la revendication 6 ou 7, caractérisé en ce que le gabarit comprend uniquement des moyens de support et des moyens de retenue.

9. Dispositif selon une quelconque des revendications 6 à 8, caractérisé en ce que le dispositif de perçage et le dispositif de pressage sont mobiles l'un par rapport à l'autre et indépendamment l'un de l'autre.

10. Dispositif selon une quelconque des revendications 6 à 9, caractérisé en ce que le gabarit est agencé sur un plancher de telle manière que la direction transversale soit la direction verticale et en ce que les moyens de guidage comprennent des rails qui s'étendent des deux côtés du gabarit et des roues, portées par les dispositifs de perçage et de pressage et qui coopèrent avec lesdits rails.

11. Dispositif selon la revendication 10, caractérisé en ce qu'il comprend deux jeux de rails, en ce qu'au moins un des dispositifs de perçage et de pressage comprend un châssis en forme de portique présentant des roues qui coopèrent avec le jeu extérieur de rails tandis que l'autre dispositif comprend des roues coopérant avec le jeu intérieur de rails et possède un profil qui passe dans l'ouverture du châssis en forme de portique.

12. Dispositif selon la revendication 11, caractérisé en ce que les moyens de support destinés à donner appui au dispositif de pressage sur le gabarit comprennent des ailes qui font saillie latéralement sur les rails et des éléments portés par le dispositif de pressage et adaptés pour s'accrocher derrière lesdites ailes.

13. Dispositif selon une quelconque des revendications 6 à 17, caractérisé par un dispositif de fraisage possédant des moyens de guidage auxiliaires qui coopèrent avec les moyens de guidage des dispositifs de perçage et de pressage.

14. Dispositif selon la revendication 13, caractérisé en ce que le dispositif de fraisage est muni de roues qui coopèrent avec les rails du dispositif de perçage ou de fraisage.

15. Dispositif selon la revendication 14, caractérisé par un dispositif de support auxiliaire séparé donnant appui au dispositif de fraisage et qui comprend un bâti muni de deux tronçons de rails, ainsi qu'un dispositif de retenue destiné à tenir les éléments de poutre en bois qu'il s'agit de fraiser.

FIG.1

FIG.2

FIG.3

FIG.4

FIG.5

FIG.6

# FIG.7

FIG. 8

FIG. 9

FIG.10

FIG.11

4

FIG.12

85

86

87

88

90

89

77

77

78

FIG.13

76

FIG.14

79

76

FIG.15

80

77

FIG. 16